# FASCICULE DE BREVET EUROPEEN

(11) **EP 1 136 323 B1**
(45) Date de publication et mention de la délivrance du brevet: **03.03.2004**
(21) Numéro de dépôt: 00810315.2
(22) Date de dépôt: 07.04.2000
(51) Int. Cl.: B60R 9/04, B60R 9/058

(54) **Porte-charge pour un véhicule automobile ainsi que véhicule automobile avec un porte-charge**
Lastenträger für ein Kraftfahrzeug sowie Kraftfahrzeug mit einem Lastenträger
Load carrier for motor vehicles as well as motor vehicle with a load carrier

(30) Priorité: 24.03.2000 EP 00810252
(43) Date de publication de la demande: 26.09.2001
(73) Titulaire: SCAMBIA INDUSTRIAL DEVELOPMENTS AKTIENGESELLSCHAFT, 9494 Schaan (LI)
(72) Inventeur: Poulet, Serge, 77170 Brie Comte Robert (FR)
(74) Mandataire: Eder, Carl E.

(56) Documents cités:
- EP-A- 0 945 307
- DE-A- 3 614 740
- DE-A- 3 729 641
- DE-A- 4 007 263
- GB-A- 2 314 059

## Description

La présente invention concerne un porte-charge pour un véhicule automobile avec un toit, comprenant au moins une barre et des moyens de fixation pour fixer la barre de façon détachable sur le toit.

Des porte-charges connus comportent des barres qui sont fixées amoviblement à chaque extrémité par une ou plusieurs vis. Un porte-charge de ce genre a l'inconvénient qu'il faut visser ou dévisser plusieurs vis chaque fois que l'on veut monter ou démonter le porte-charge. Pour serrer et déserrer les vis, il faut normalement utiliser un outil. Les vis sont en plus souvent relativement difficilement accessibles. Il est donc embarrassant et exige beaucoup de temps pour monter et démonter les barres. Le montage à l'aide de vis amène en plus le risque que la fixation ne soit pas assez solide et/ou étanche si les vis ne sont pas serrées suffisamment ou que l'on cause des détériorations si les vis sont trop serrées.

Le document GB 2 314 059 A révèle un porte-charge qui possède deux rails fixés au toit d'un véhicule automobile et deux barres. Chaque barre a deux fixages dont chacun peut être fixé à un des deux rails. Un organe de commande possède une roue à main et un boulon fileté qui tient une pièce d'écartement. Un élément d'arrêt a deux bras résilients avec des crochets. L'élément d'arrêt peut être déplacé le long du boulon en tournant la roue à main de manière à ce que les crochets puissent être amenés dans une position de verrouillage ou de déverrouillage. Ce porte-charge a les inconvénients que la roue à main doit être tournée par plusieurs révolutions pour amener les crochets de la position de déverrouillage dans la position de verrouillage ou vice versa et que le montage ou démontage des barres exige beaucoup de temps. Ce porte-charge a en plus les inconvénients que les positions de verrouillage et de déverrouillage ne sont pas bien définies ce qui amène le risque que la fixation ne soit pas assez solide si les crochets ne sont pas serrés suffisamment.

Le document DE 40 07 263 A révèle un porte-charge avec quatre éléments de retenue fixés au toit d'un véhicule automobile. Chacun de ces éléments de retenue a une plaquette de montage et deux capotes limitant des ouvertures disposées face à face. Le document DE 40 07 263 A1 révèle en plus différents dispositifs de fixation pouvant être fixés aux éléments de retenue et ayant deux jambes avec un pied qui peut être introduit dans une desdites ouvertures. Le premier dispositif de fixation décrit possède une roue à main, un excentrique et une roue planétaire. Le deuxième dispositif de fixation décrit possède un ressort tirant les deux jambes l'une contre l'autre, une broche filetée et un élargisseur qui a un trou taraudé et peut être déplacé en tournant la broche pour écarter les deux jambes. Le troisième dispositif de fixation a un excentrique pour écarter les deux jambes, mais nécessite cependant encore des moyens pour supporter et tourner l'excentrique. Ces dispositifs de fixation ont les inconvénients qu'ils sont assez compliqués et/ou nécessitent beaucoup de temps pour le montage ou démontage d'une barre.

Le document EP 0 945 307 A révèle une barre de toit avec deux fixages. Chaque fixage comporte par exemple deux crochets qui peuvent être pivotés à l'aide d'une vis et d'un écrou. Une barre pareille a des inconvénients similaires à ceux des barres connues du document GB 2 314 059 A.

La présente invention a pour but de fournir un porte-charge amélioré dans lequel des inconvénients mentionnés des porte-charges connus sont éliminés. Plus en détail, il est aspiré à créer, à partir du porte-charge connu du document GB 2 134 059 A, un porte-charge avec au moins une barre et des moyens de fixation qui permettent de fixer et détacher la barre simplement et rapidement et qui assurent une fixation solide dans la position de verrouillage.

Selon l'invention, ce but est atteint par un porte-charge tel que défini dans la revendication 1.

L'invention concerne également un véhicule automobile avec un toit et un porte-charge, le véhicule étant défini selon l'invention par la revendication 10.

Des caractéristiques préférées de l'invention font l'objet de revendications dépendantes.

L'objet de l'invention va maintenant être expliqué plus en détail à l'aide d'exemples de réalisation avantageux représentés dans les dessins. Dans les dessins:
la figure 1 est une vue oblique sur le toit d'un véhicule automobile équipé d'un porte-charge avec deux barres dont chacune est fixée avec deux dispositifs de fixation,
la figure 2 représente une coupe à travers un élément de retenue et un dispositif de fixation dans la position verrouillée,
la figure 3 représente une coupe suivant la ligne III - III de la figure 2,
la figure 4 représente une coupe suivant la ligne IV - IV de la figure 2,
la figure 5 est une vue oblique d'un élément de retenue et d'un dispositif de fixation dans la position verrouillée,
les figures 6 à 9 sont des représentation correspondantes à celles dans les figures 2 à 5, mais dans la position déverrouillée,
la figure 10 est une représentation d'explosion d'un élément de retenue et d'un dispositif de fixation,
les figures 11 et 12 sont des représentations correspondantes à celles dans les figures 2 et 3 d'un autre dispositif de fixation dans la position verrouillée,
les figures 13, 14 et 15 représentent des coupes suivant les lignes XIII - XIII, XIV - XIV et XV - XV de la figure 11,
les figures 16 et 17 représentent des coupes à travers le dispositif de fixation selon les figures 11 et 12, mais dans la position déverrouillée,
les figures 18 et 19 représentent des coupes à travers d'un autre dispositif de fixation dans la position verrouillée et
les figures 20 et 21 représentent des coupes à travers le dispositif selon les figures 18 et 19, mais dans la position déverrouillée.

Il est à remarquer que diverses figures furent simplifiées pour des raisons de clarté.

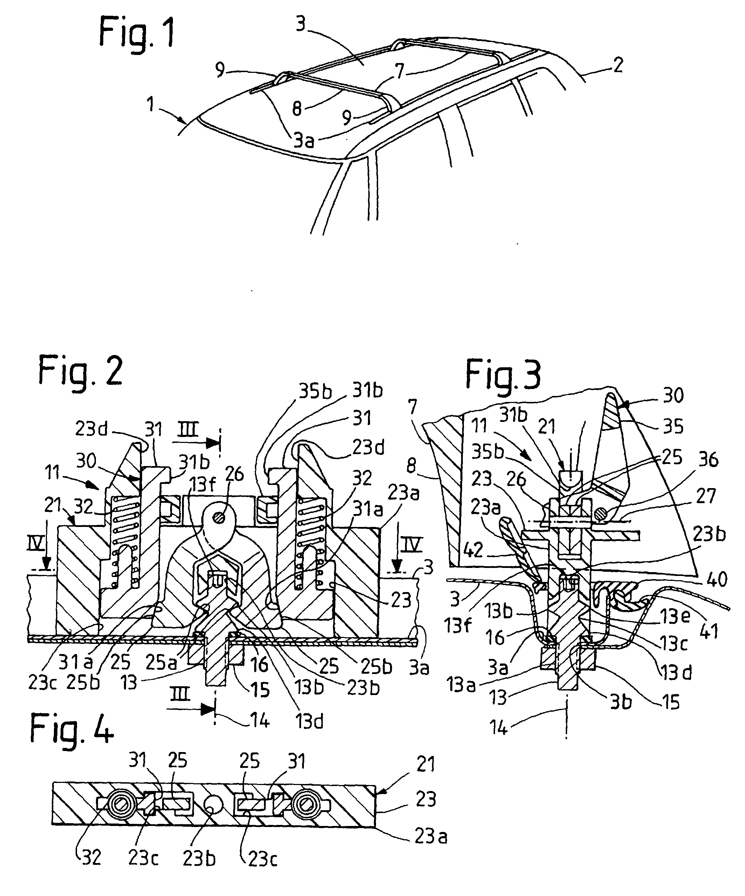

Le véhicule automobile 1 visible dans la figure 1 comporte un pavillon 2 avec un toit 3. Le toit 3 possède deux rainures 3a s'étendant à peu près dans la direction longitudinale du véhicule automobile 1 le long des bordures du toit 3. La position du véhicule automobile 1, où celui-ci se trouve sur une surface plate et horizontale, est désignée ci-après comme position normale du véhicule.

Un porte-charge 6 comporte au moins une barre de toit 7 et par exemple deux barres de toit 7. Chaque barre de toit 7 est substantiellement transversale par rapport au véhicule et a un secteur central 8 et deux sections d'extrémité 9. Le secteur central 8 est au moins approximativement droit et, dans la position normale du véhicule, approximativement horizontale. Les sections d'extrémité 9 de chaque barre 7 sont courbes et/ou forment un angle avec le secteur central 8. Les sections d'extrémité 9 sont formées par exemple par des pièces d'extrémité initialement séparées qui sont aussi dites crosses. Chaque barre 7 et au particulier chaque section d'extrémité 9 est substantiellement creuse et limite un intérieur. Chaque section d'extrémité 9 comporte un part principal avec des parois solides et un capot à charnière qui est disposé au côté supérieur et peut être ouvert et fermé pour rendre l'intérieur de la section d'extrémité accessible ou bien inaccessible.

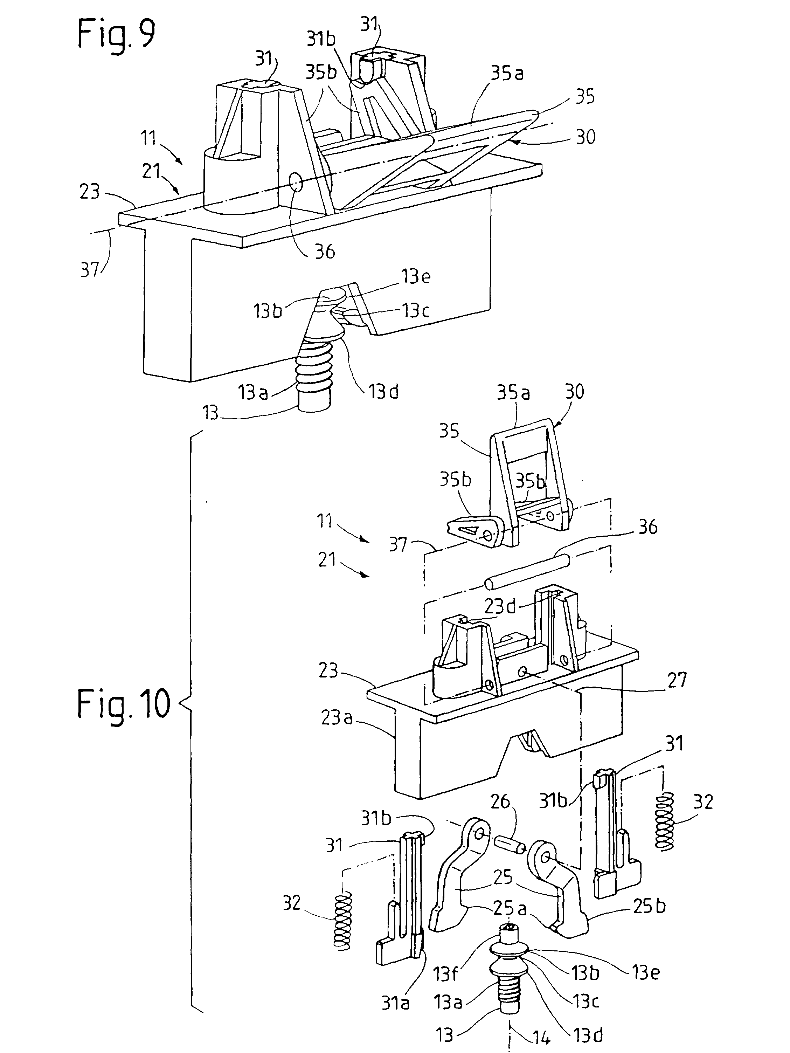

Chaque barre 7 est fixée à chacune de ses sections d'extrémité 9 de façon détachable sur le toit 3. Cette fixation est obtenue à l'aide des moyens de fixation 11 visibles dans les figures 2 à 10. Les figures 2, 3, 6 et 7 montrent aussi une partie du toit 3 avec une des rainures 3a, tandis que le toit fut laissé de côté dans les figures 4, 5, 8 à 10. Le toit 3 est pourvu des trous 3b dont chacun est attribué à une section d'extrémité 9 d'une des barres 7 et pénètre le fond d'une des rainures 3a. Les moyens de fixation 11 comprennent quatre éléments de retenue 13 dont chacun est attribué à une section d'extrémité 9 d'une des barres 7 et fixé au toit 3. Chaque élément de retenue 13 est formé par un boulon de retenue et définit un axe 14 qui est au moins approximativement vertical dans la position normale du véhicule. Chaque élément de retenue 13 possède une section de fixation 13a formée par exemple d'une tige pourvue au moins en partie d'un filet. Chaque élément de retenue comprend aussi une partie de prise 13b qui est disposée au-dessus de la section de fixation 13a et possède une rainure annulaire 13c bordée au côte inférieur par une saillie latérale 13d et au côté supérieur par une saillie latérale 13e. Les deux saillies latérales 13d, 13e, sont annulaires et ressautent latéralement, c'est à dire plus ou moins radialement, tout autour de la rainure annulaire 13c. L'extrémité supérieure de l'élément de retenue 13 est formée par une tête 13f. La saillie latérale 13d inférieure présente au côté inférieur une surface d'appui qui est annulaire, perpendiculaire à l'axe 14 et plate. Les surfaces des deux saillies 13d, 13e limitant la rainure 13c sont inclinées par rapport à l'axe 14 à partir du fond de la rainure vers l'extérieur en bas ou en haut, respectivement, de manière à ce que la rainure 13c devienne plus large vers l'extérieur. La tête 13f est pourvue de surfaces d'entraînement qui sont par exemple plates et configurées pour qu'un outil puisse être mis en prise avec la tête 13f pour tourner l'élément de retenue. La tête 13f peut par exemple comprendre un creux hexagonal ou un contour hexagonal ou une fente formant lesdits surfaces d'entraînement.

La section de fixation 13a ou tige de chaque élément de retenue 13 pénètre un des trous 3a du toit 3 et est fixé au toit à l'aide d'un écrou 15 ou d'une douille qui a un filet intérieur et est soudée ou autrement fixée au toit ou de ce genre de choses. Une rondelle d'étanchéité 16 est disposée entre la surface supérieure du toit 3 et la surface d'appui de la saillie 13d inférieure de l'élément de retenue. La partie de prise 13b et la tête 13f de chaque élément de retenue 13 se trouvent au-dessus de la surface supérieure du fond d'une des rainures 3a du toit et au moins en partie et, de préférence, à peu près entièrement dans la rainure 3a en question.

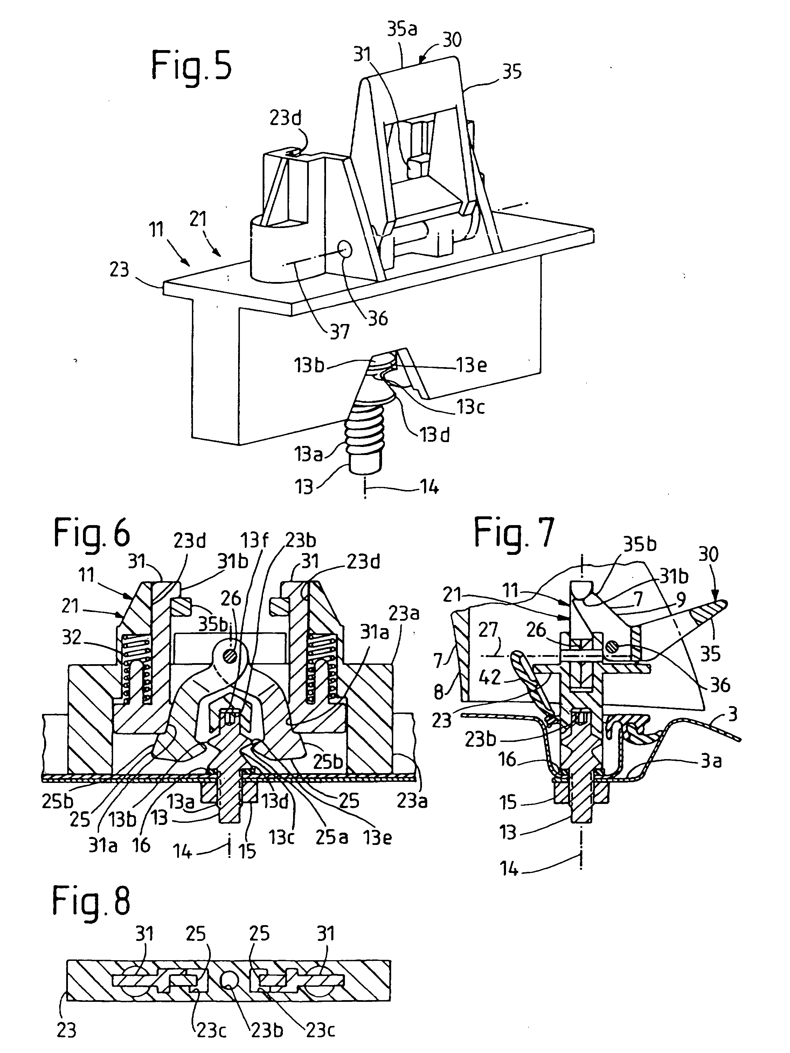

Les moyens de fixations 11 comprennent des dispositifs de fixation 21 dont chacun est attribué à une des sections d'extrémité 9 d'une barre 7 et substantiellement arrangé dans l'intérieur de cette section d'extrémité. Comme il est décrit plus en détail ci-après, chaque dispositif de fixation 21 comprend des moyens permettant de fixer chaque dispositif de fixation rigidement, mais de façon détachable sur le toit à un des éléments de retenue 13. Chaque dispositif de fixation 21 comprend un support 23 qui est représenté un peu simplifié dans des figures 2 à 10 et relié rigidement aux parois solides de la section d'extrémité 9. Le part principal de la section d'extrémité 9 ou crosse et le support 23 peuvent, par exemple, être constitués d'une seule pièce. Le support 23 comporte une section principale 23a ayant en général une forme de T dans les sections simplifiées représentées dans les figures 3 et 7. La section principale 23a présente un montant à peu près vertical et un plateau à peu près horizontal. Si les barres sont fixées sur le toit dans l'état de fixation, l'extrémité inférieure du montant de la section principale 23a est appuyée sur le fond de la rainure 3a comme il est visible dans les figures 2 et 6. La section principale 23a est pourvue d'un trou borgne 23b vertical qui loge la tête 13f de l'élément de retenue attribué dans l'état de fixation des barres. La section principale 23a du support 23 a deux trous 23c qui sont parallèles au trou borgne 23b et symétriques par rapport au dernier et traversent le support. Le support 23 possède au-dessus du plateau de la section principale 23a des montants pourvus avec des rainures qui forment ensemble avec des parties des trous 23c deux glissières de guidage 23d parallèles à l'axe 14 de l'élément de retenue.

Chaque dispositif de fixation 21 comporte au moins un élément de fixation et/ou d'arrêt 25 constitué d'un crochet 25 et, de préférence, deux de ces éléments ou crochets 25 qui sont mobiles par rapport au support 23, à savoir pivotant. Les crochets 25 sont supportés par un tourillon 26 dans le support 23 de manière à ce qu'ils puissent pivoter autour d'un axe de pivot 27 commun. Cet axe de pivot 27 des crochets croise l'axe 14 de l'élément de retenue 13 attribué perpendiculairement et se trouve un peu au-dessus du plateau de la section principale 23a du support. L'axe de pivot 27 des crochets est, par exemple, approximativement parallèle à la direction longitudinale du secteur central 8 de la barre 7 et à peu près perpendiculaire à la direction longitudinale de la rainure 3a. Le tourillon 26 pénètre un trou des crochets 25 à proximité de leurs extrémités supérieures de façon que les plus grandes parties des crochets pendent à partir du tourillon 26 vers le bas. Chaque crochet possède à proximité de son extrémité inférieure et plus éloignée du tourillon 26 une partie de prise 25a avec un nez saillant vers l'axe 14 et vers l'autre crochet. Chaque crochet 25 a une surface de verrouillage et/ou d'appui 25b au bord détourné de l'élément de retenue. Cette surface de verrouillage 25b est opposée au nez de la partie de prise et inclinée par rapport à un plan vertical à travers les axes 14 et 27 de manière à ce que la surface de verrouillage 25b s'éloigne dudit plan vertical vers le bas.

Chaque dispositif de fixation 21 comprend encore des moyens de verrouillage 30 avec au moins un bloqueur 31, à savoir deux bloqueurs 31 dont chacun est attribué à un des crochets 25. Chaque bloqueur 31 est guidé déplaçablement dans une des glissières de guidage 23d du support 23 et possède dans une section d'extrémité inférieure une surface de pression et/ou d'appui 31a qui est inclinée par rapport à l'axe 14 et la direction de déplacement du bloqueur 31. Les bloqueurs 31 sont pourvus à l'extrémité supérieure d'un taquet d'entraînement 31b saillant vers l'axe 14. Chaque bloqueur tient un ressort hélicoïdal de pression 32 qui est appuyé sur une surface du support 23 et presse le bloqueur vers le bas.

Les moyens de verrouillage 30 de chacun des dispositifs de fixation 21 comportent une manette 35 supportée dans le support 23 à l'aide d'un tourillon 36. La manette 35 peut être pivotée autour d'un axe de pivot perpendiculaire à l'axe 14 de l'élément de retenue et à l'axe de pivot 27 des crochets. La manette 35 a un manche 35a et deux bras 35b. Les bras 35b sont coudés par rapport au manche et configurés pour coopérer avec les taquets d'entraînement 31b des bloqueurs 31 et pour déplacer les bloqueurs contre la force appliquée par les ressorts 32 aux bloqueurs.

Le porte-charge comprend encore des bandes de recouvrement et d'étanchéité 40, 41 pour recouvrir et étancher les rainures 3a au moins lorsque les barres 7 sont détachées du toit. La bande 40 peut être pourvue, dans la région de chacun des éléments de retenue 13, d'une ouverture et d'un secteur formant un volet 42 rabattable qui permet d'ouvrir et de fermer ladite ouverture.

La fonction et l'utilisation des moyens de fixation 11 pour le montage et démontage de barres 7 vont maintenant être décrites. Il est assumé d'abord que les barres 7 soient arrangées sur le toit 3 et que chacun des dispositifs de fixation 21 se trouve sur l'élément de retenue 13 attribué comme dessiné dans les figures 1 à 10.

Les crochets 25 constituant des éléments de fixation et/ou d'arrêt 25 peuvent être mus, à savoir pivotés autour de l'axe de pivot 27. La manette 35 et les bloqueurs 31 peuvent être mus alternativement d'une position de verrouillage dans une position de déverrouillage et libération et dans le sens inverse. Ceci permet de verrouiller et déverrouiller les crochets et d'amener les derniers alternativement d'un état de verrouillage et de prise dans un état de déverrouillage et libération et vice versa.

Maintenant il est assumé que la manette 35 se trouve dans la position de verrouillage et que les crochets 25 se trouvent par conséquence dans l'état de verrouillage et de prise comme il est représenté dans les figures 2 à 5.

Si la manette 35 est dans la position de verrouillage, le manche 35a est à peu près vertical et les bras 35b sont à peu près horizontaux comme il est visible dans les figures 3 et 5. Les ressorts 32 poussent les bloqueurs 31 dans la plus basse position possible formant la position de verrouillage. Les taquets d'entraînement 31b des bloqueurs sont séparés dans cette position par des espaces libres des bras 35b de la manette 35. Les surfaces de pression 31a des bloqueurs 31 contactent alors les surfaces de verrouillage 25b des crochets 25, sont à peu près parallèles à ces surfaces 25b et portent bien contre celles-ci. Les bloqueurs appliquent dans la position de verrouillage des forces aux crochets 25. Ces forces engendrent un couple de rotation des crochets et pressent les parties de prises 25a des crochets 25 contre la partie de prise 13b de l'élément de retenue 13. Les parties de prises 25a des crochets 25 saisissent et engrènent la partie de prise 13b de l'élément de retenue 13 à des côtés ou places de ceux-ci qui sont au moins approximativement diamétralement opposés l'un à l'autre par rapport à l'axe 14 de l'élément de retenue. Les nez des parties de prise 25a des crochets 25 pénètrent dans la rainure 13c de l'élément de retenue 13 et sont pressés avec leurs surfaces supérieures inclinées contre la surface annulaire inférieure inclinée de la saillie latérale 13e supérieure de l'élément de retenue. La surface annulaire de la saillie 13e supérieure forme donc une surface de butée et/ou d'appui pour le nez des crochets. Les deux crochets accrochent et serrent alors le support 23 à l'élément de retenue 13 et pressent le support contre le fond de la rainure 3a attribué du toit. Les sections d'extrémité supérieures des éléments de retenue 13 formées par les têtes 13f des éléments de retenue pénètrent avec au plus un petit jeu radial dans les trous 23b des supports 23 et protègent les dispositifs de fixation en plus contre des déplacements dans toutes les directions perpendiculaires aux axes 14 des éléments de retenue. Si les quatre dispositifs de fixations sont tous dans ces positions et états, les deux barres 7 sont fixées de façon rigide et solide sur le toit. Chaque dispositif de fixation forme donc un genre de pince de serrage.

Pour détacher les barres 7 du toit 3, une personne peut ouvrir les capots des sections d'extrémité pour rendre accessible les manettes 35 et ensuite saisir et pivoter les manettes 35 des quatre dispositifs de fixation 21 l'une après l'autre de la position de verrouillage dans la position de déverrouillage et libération visible dans les figures 6, 7 et 9. Lors du mouvement pivotant d'une manette 35, les bras 35b sont inclinés vers le haut, viennent en contact avec les taquets d'entraînement 31b des deux bloqueurs 31 du dispositif de fixation en question et poussent les bloqueurs contre les forces appliquées aux bloqueurs par les ressorts le long des glissières de guidage 23d vers le haut. Les bloqueurs sont de ce fait déplacés dans la position de déverrouillage et libération visible particulièrement bien dans la figure 6. Les crochets 25 sont déverrouillés de ce fait et amenés dans l'état de déverrouillage et libération. Dans cet état, les parties de prise 25a des deux crochets 25 peuvent s'écarter l'une de l'autre dans les positions représentées dans la figure 6. Il y a à remarquer sur ce point que le poids des crochets 25 suspendus au tourillon 26 engendre un couple de rotation qui a la tendance de maintenir les crochets encore dans la position où leurs nez pénètrent .dans la rainure 13c de l'élément de retenue 13. Si le dispositif de fixation 21 est cependant soulevé, les nez des parties de prises des bloqueurs sont automatiquement sorties de la rainure annulaire 13c comme il est représenté dans la figure 6. Les crochets peuvent alors glisser facilement au-delà de la saillie 13e supérieure de l'élément de retenue. Si les deux dispositifs de fixation appartenant à une barre sont déverrouillés, une personne peut soulever la barre et détacher celle-ci du toit. Chaque volet 42 peut ensuite être fermé de sorte qu'il couvre l'élément de retenue 13.

Si les barres 7 sont à fixer de nouveau sur le toit 3, on peut rouvrir les volets 42 pour rendre accessible les éléments de retenue 13 de l'espace au-dessus du toit 3. Puis on peut arranger une des barres au-dessus des deux éléments de retenue 13 attribués à la barre concernée et ensuite abaisser la barre de manière à ce que la tête 13f de l'élément de retenue 13 glisse dans le trou borgne 23b du support. Chaque dispositif de fixation 21 peut être abaissé dans cette opération jusqu'à ce que l'extrémité inférieure de son support 23 atteint le fond de la rainure 3a attribuée du toit 3. Les nez des crochets pénètrent alors dans la rainure annulaire 13c de l'élément de retenue 13 concernée. Si les deux dispositifs de fixation d'une barre furent situés de cette façon sur les éléments de retenue, une personne peut saisir et pivoter la manette 35 de chaque dispositif de fixation de cette barre dans sa position de verrouillage. Si une manette d'un des dispositifs de fixation est pivotée, les ressorts 32 poussent les bloqueurs 31 le long des glissières de guidage 23d dans la position de verrouillage où ils verrouillent les crochets de manière à ce que les derniers sont amenés et maintenus en prise avec l'élément de retenue 13 attribué. Finalement, une personne peut fermer les capots des sections d'extrémité 9 des barres et couvrir les manettes et des autres parts des dispositifs de fixation.

Les éléments de retenue 13 et les dispositifs de fixation 21 permettent donc de détacher les barres 7 et de les fixer de nouveau sur le toit de façon simple et rapide. Une personne peut facilement pivoter les manettes 35 à la main pour amener les manettes 35 et les bloqueurs 31 de la position de verrouillage dans la position de déverrouillage et déverrouiller les crochets et vice versa. Les barres peuvent donc être détachées et fixées sans l'utilisation d'un outil. La procédure de fixation assure en plus que l'on obtient une fixation solide sans le risque de détériorer quelque chose par un serrage exagéré.

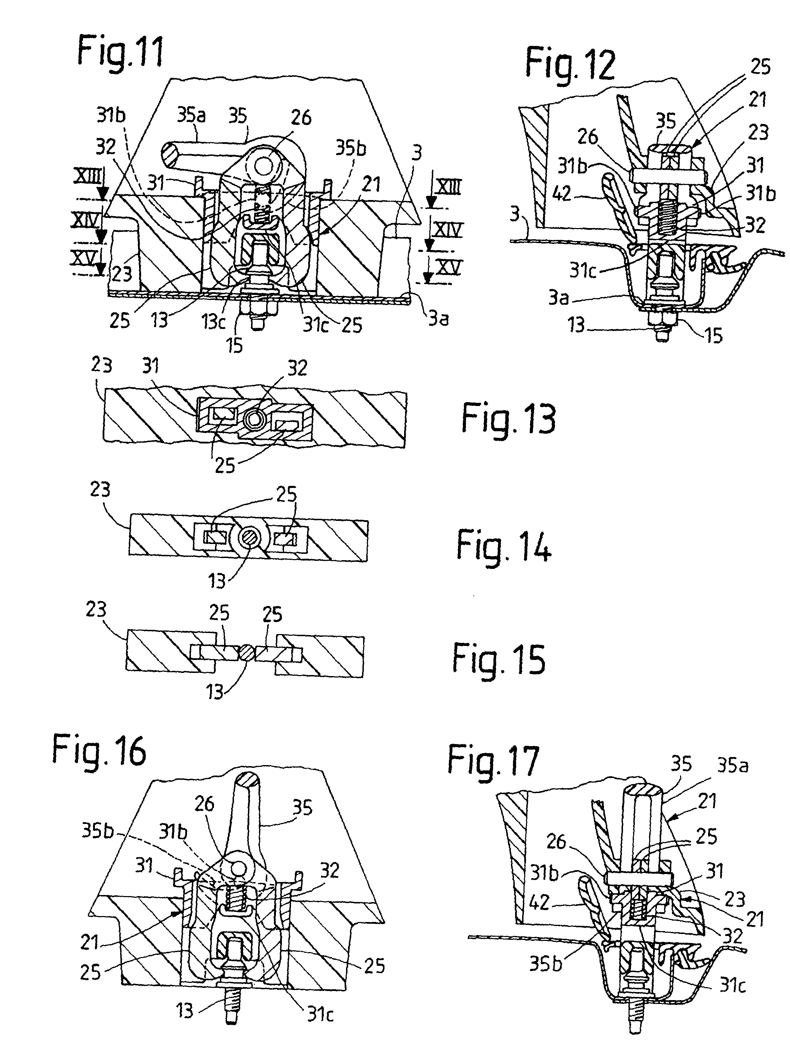

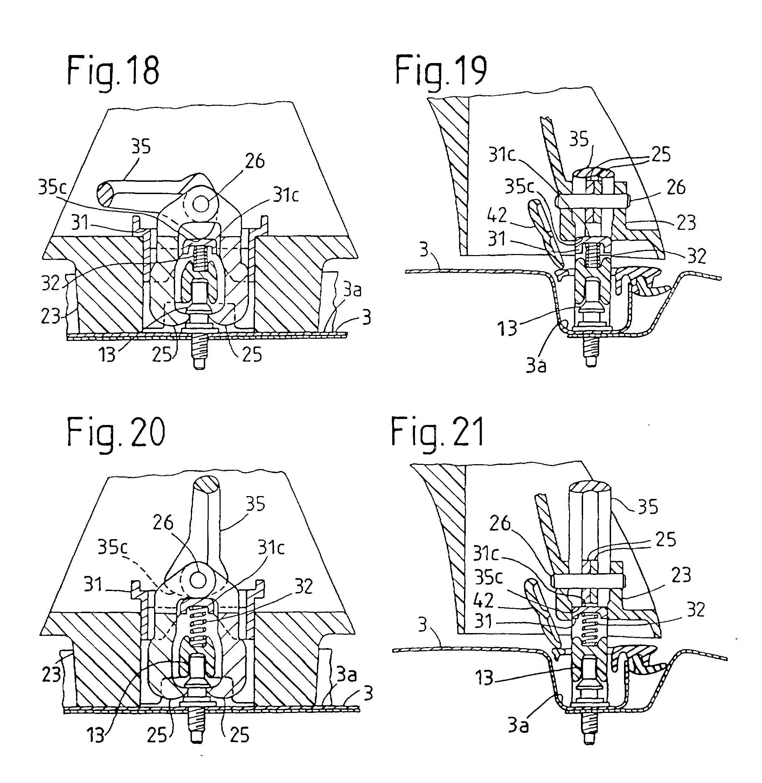

Les deux variantes des moyens de fixation visibles dans les figures 11 à 17 et dans les figures 18 à 21 sont en grande partie similaires à la variante décrite en référence aux figures 1 à 10. Les pièces des deux variantes selon les figures 11 à 17 et 18 à 21 qui sont plus ou moins similaires à des pièces représentées dans les figures 1 à 10 sont donc désignées ci-après par les mêmes repères.

Les moyens de fixation visibles dans les figures 11 à 17 comportent un élément de retenue 13 qui se distingue de celui selon les figures 2 à 10 par le fait que les surfaces des saillies qui limitant la rainure 13c sont perpendiculaires à l'axe de l'élément de retenue, mais pourraient être inclinés de façon similaire que les surfaces correspondantes de l'élément de retenue selon les figures 2 à 10.

Le dispositif de fixation 21 visible dans les figures 11 à 17 comprend - comme celui-ci représenté dans les figures 2 à 10 - un support 23 et deux éléments de fixation et/ou d'arrêt 25, à savoir deux crochets 25 supportés de façon pivotante par rapport au support à l'aide d'un tourillon 26. Les deux bloqueurs 31 du dispositif de fixation selon les figures 2 à 10 sont pourtant remplacés par un seul bloqueur 31 configuré pour verrouiller les deux crochets 25 du dispositif. Ce bloqueur 31 est formé par une douille avec quatre parois. Deux de ces parois, qui sont opposées l'une à l'autre, ont un taquet d'entraînement 31b saillant vers l'extérieur et sont reliées d'une entretoise 31c.

Les deux ressorts hélicoïdaux 32 du dispositif de fixation selon les figures 2 à 10 sont remplacés par un seul ressort hélicoïdal 32. Ce ressort définit et entoure un axe qui est aligné avec l'axe du boulon formant l'élément de retenue 13. L'extrémité inférieure du ressort 32 est située sur l'entretoise 31c du bloqueur 31. L'extrémité supérieure du ressort 32 s'appuie, par exemple, contre les sections d'extrémité supérieures des deux crochets 25, ces sections d'extrémité étant supportées pivotantes sur un tourillon 26. L'extrémité supérieure du ressort 32 est donc supportée via les sections d'extrémité supérieures des crochets 25 et le tourillon 26 par le support 23. La manette 35 du dispositif de fixation 21 dessiné dans les figures 11 à 17 est pivotant autour du même tourillon 26 qui supporte les crochets 25. Cette manette 35 a un manche 35a et deux bras 35b coudés par rapport au manche. Ces bras 35b ont une forme de croissant et touchent les taquets d'entraînement 31b au côté inférieur de ces taquets. Dans la figure 11, le manche 35a est à peu près horizontal. Le bloqueur 31 se trouve alors dans la plus basse position possible et presse les extrémités inférieures des deux crochets contre le fond de la rainure 13c de l'élément de retenue 13. Les figures 11 à 15 illustrent l'état dans lequel la manette 35 et le bloqueur 31 sont dans la position de verrouillage et les deux crochets 25 sont verrouillés dans l'état de prise.

La manette 35 peut être pivotée de sa position de verrouillage dans sa position de déverrouillage représentée dans les figures 16 et 17. Le mouvement pivotant engendre un déplacement du bloqueur 31 vers le haut contre la force appliquée par le ressort 32 au bloqueur. Les crochets arrivent alors à l'état de libération.

Le dispositif de fixation dessiné dans les figures 18 à 21 comporte - comme celui selon les figures 11 à 17 - seulement un seul bloqueur 31 et un seul ressort 32. L'extrémité inférieure du ressort est située sur une entretoise du support 23, tandis que l'extrémité supérieure du ressort touche le côté inférieur de l'entretoise 31c du bloqueur 31 et presse celui-ci vers le haut. La manette 35 est supportée par le même tourillon 26 que les crochets 25 constituant des éléments de fixation et/ou d'arrêt comme au cas de la variante selon les figures 11 à 17. La manette 35 a une paire de cames 35c qui appuient sur la surface supérieure de l'entretoise 31c du bloqueur 31.

La manette 35 est representée dans les figures 18 et 19 dans sa position de verrouillage. Les cames 35c pressent le bloqueur 31 dans la plus basse position possible formant la position de verrouillage du bloqueur. Les crochets sont alors verrouillés dans l'état de prise.

Si la manette est pivotée dans sa position de déverrouillage représentée dans les figures 20, 21, les formes des cames 35c permettent que le ressort 32 déplace le bloqueur vers le haut dans la position de déverrouillage. Les crochets 25 parviennent de ce fait dans l'état de libération où ils peuvent être écartés d'un de l'autre.

A moins que rien d'autre ait été écrit préalablement, les moyens de fixation décrits en référence aux figures 11 à 17 et 18 à 20 peuvent être similaires et être utilisés similairement que ceux décrits en référence aux figures 1 à 10. La manette 35 est d'ailleurs configurée dans toutes les variantes de sorte qu'elle ne se tourne pas sans intention. La section d'extrémité 9 des barres, les supports 23 et les manettes 35 des différentes variantes sont faits d'ailleurs, par exemple, en matière artificielle assez dure et peuvent être fabriqués par injection. Les éléments de retenue 13, les crochets 25, les bloqueurs 31 et les tourillons 26, 36 sont, par exemple, en métal.

Le toit du véhicule automobile et le porte-charge peuvent encore être modifiés autrement. On peut notamment combiner des caractéristiques de différents exemples de réalisation décrits ci-devant en référence aux figures 1 à 21. De plus, les éléments de retenue peuvent, par exemple, être fixés sur une partie plate du toit et non pas dans des rainures. Au lieu de fixer les éléments de retenue 13 au moyen de vis, ils pourraient être fixés autrement, par exemple, rivés ou soudés au toit. La saillie latérale 13d inférieure des éléments de retenue 13 pourrait éventuellement être laissée de côté. La partie de prise pourrait dans ce cas être formée, par exemple, d'une section cylindrique limitée à l'extrémité supérieure par une saillie latérale annulaire et étant située à l'extrémité inférieure sur le toit des véhicules. Les éléments de retenue 13 ayant la forme d'un boulon ne doivent éventuellement même pas avoir une symétrie de révolution et pourraient posséder deux surfaces latérales qui sont opposées l'une à l'autre et présentent au moins une saillie latérale et/ou rainure transversale et/ou au moins un creux et/ou autres choses semblables pour former une partie de prise qui a au moins une surface de butée qui vise la surface du toit supportant l'élément de retenue et forme un angle avec la direction de déplacement du bloqueur ou des bloqueurs.

Le toit du véhicule pourrait être pourvu de deux glissières arrangées, par exemple, dans les rainures 3a et guidant des glissoirs qui peuvent être déplacés le long des glissières et fixés dans différentes positions. Chaque élément de retenue pourrait alors être fixé de façon rigide à un des glissoirs.

Chacun des dispositifs de fixation pourrait éventuellement comprendre seulement un seul crochet ou plus de deux crochets. Les crochets supportés de façon pivotante à l'aide d'un tourillon pourraient éventuellement être remplacés par des crochets qui sont fixés rigidement au support et ont une partie déformable et élastique, en particulier flexible, tel qu'un ressort-lame.

## Revendications

1. Porte-charge pour un véhicule automobile (1) avec un toit (3), comprenant au moins une barre (7) et des moyens de fixation (11) pour fixer la barre (7) de façon détachable sur le toit (3), les moyens de fixation (11) comprenant des éléments de retenue (13) et, pour chaque élément de retenue (13), au moins un crochet (25) et des moyens de verrouillage (30), chaque élément de retenue (13) étant configuré à être tenu sur le toit (3), le ou chaque crochet (25) étant mobile par rapport à la barre (7) ou étant au moins en partie déformable et élastique, les moyens de verrouillage (30) étant ajustable d'une position de verrouillage dans une position de déverrouillage, verrouillant les crochets (25) dans la position de verrouillage et déverrouillant les crochets (25) dans la position de déverrouillage de manière à ce que les crochets (25) soient en prise avec les éléments de retenue (13) et serrent la barre (7) aux éléments de retenue (13) dans la position de verrouillage et que les crochets (25) puissent être séparés des éléments de retenue (13) dans la position de déverrouillage, et les moyens de verrouillage (30) comportant, pour chaque élément de retenue (13), au moins un bloqueur (31) déplacable de la position de déverrouillage dans la position de verrouillage et/ou vice versa et configuré pour appliquer une force au crochet (25) attribué audit élément de retenue (13) ou à un des crochets (25) ou aux crochets (25) attribués audit élément de retenue (13) dans la position de verrouillage ainsi qu'une manette (35) supportée par la barre (7) pour déplacer le ou chaque bloqueur (31) attribué audit élément de retenue (13) de la position de verrouillage dans la position de déverrouillage et/ou inversement,
caractérisé en que chaque élément de retenue (13) est formé au moins en partie par un boulon ayant au moins une rainure (13c) et/ou au moins une saillie (13d) et/ou au moins un creux formant au moins une section d'une partie de prise (13b) de l'élément de retenue (13), que les moyens de verrouillage (30) comprennent au moins un ressort (32) pour chaque bloqueur (31) appliquant une force au bloqueur (31), que cette force tend à déplacer le bloqueur (31) de la position de déverrouillage vers la position de verrouillage ou vice versa et que chaque manette (35) est pivotante par rapport à la barre (7) et configurée pour déplacer le ou chaque bloqueur (31) attribué au même élément de retenue (13) contre la force appliquée au bloqueur (31) par le ressort (32).

2. Porte-charge selon la revendication 1, **caractérisé en ce que** chaque crochet (25) est supporté par la barre (7) de manière à ce qu'il puisse pivoter autour d'un axe de pivot (27), que chaque bloqueur (31) est guidé par la barre (7) dans une direction de déplacement qui est perpendiculaire à l'axe de pivot (27) du crochet (25) attribué et que l'axe de pivot (27) du crochet (25) est arrangé de manière à ce que cet axe de pivot (27) soit approximativement perpendiculaire à la direction longitudinale du véhicule automobile (1) si la barre (7) est fixée sur le toit (3) du véhicule automobile (1).

3. Porte-charge selon la revendication 1 ou 2, **caractérisé en ce que** chaque ressort (32) est arrangé de manière à ce qu'il presse le bloqueur (31) vers la position de verrouillage.

4. Porte-charge selon la revendication 3, **caractérisé en ce que** chaque bloqueur (31) possède une surface de pression et/ou d'appui (31a) ainsi qu'un taquet d'entraînement (31b) et contacte le ou chaque crochet (25) attribué audit bloqueur (31) avec la surface de pression et/ou d'appui (31a) et presse le crochet (25) respectif contre l'élément de retenue (13) attribué dans la position de verrouillage et que chaque manette (35) a un bras (35b) qui est séparé du taquet d'entraînement (31b) du ou de chaque bloqueur (31) attribué dans la position de verrouillage et qui est arrangé pour venir en contact avec le taquet d'entraînement (31b) du ou de chaque bloqueur (31) attribué et pour déplacer le ou chaque bloqueur (31) attribué lors d'un déverrouillage.

5. Porte-charge selon l'une quelconque des revendication 1 à 4, **caractérisé en ce que** chacun des éléments de retenue (13) est configuré pour être tenu au toit (3) de manière à ce que sa partie de prise (13b) ou chacune de ses parties de prise soit accessible et/ou puisse être rendue accessible d'un espace au-dessus du toit (3), que la barre (7) a deux sections d'extrémité (9), que les moyens de fixation (11) comportent deux crochets (25) à chaque section d'extrémité (9), que chaque crochet (25) a une partie de prise (25a) qui engrène une partie de prise (13b) de l'élément de retenue (13) attribué si les crochets (25) sont verrouillés, les moyens de verrouillage (30) présentant, par exemple, pour chaque crochet (25), un bloqueur (31) particulier ou un bloqueur (31) commun pour les crochets (25) arrangés à la même section d'extrémité (9).

6. Porte-charge selon la revendication 5, **caractérisé en ce que** les deux crochets (25) arrangés à la même section d'extrémité (9) ont des parties de prise (25a) configurés pour engrener un élément de retenue (13) attribué à des côtés des deux crochets (25) qui sont en face l'un à l'autre.

7. Porte-charge selon l'une quelconque des revendications 1 à 6, **caractérisé en ce que** la partie de prise (13b) de chaque élément de retenue (13) présente au moins une surface de butée pour retenir une partie de prise (25a) d'au moins un crochet (25) attribué au respectif élément de retenue (13), la ou chaque surface de buté formant, par exemple, un angle avec une direction verticale.

8. Porte-charge selon l'une quelconque des revendications 1 à 7, **caracterisé en ce que** la rainure (13c) formant au moins une section de la partie de prise (13b) de l'élément de retenue (13) est annulaire.

9. Porte-charge selon la revendication 8, **caractérisé en ce que** chaque élément de retenue (13) a une section de fixation (13a) avec un filet pour fixer l'élément de retenue (13) au toit (3) et est pourvue avec des surfaces d'entraînement configurées pour qu'un outil puisse être mise en prise avec la l'élément de retenue (13) pour tourner celui-ci.

10. Véhicule automobile avec un toit (3) et avec un porte-charge (6) selon l'une quelconque des revendications 1 à 9, **caractérisé en ce que** chaque élément de retenue (13) est fixé rigidement au toit (3) ou à un glissoir déplaçable le long d'une glissière fixée sur le toit (3).

11. Véhicule automobile selon la revendication 10, **caractérisé en ce que** les éléments de retenue (13) sont fixés rigidement au toit (3) et arrangés de manière à ce que la ou chaque barre (7) est, si elle est fixée, substantiellement transversale par rapport au véhicule automobile (1) et que les axes de pivot (27) des crochets (25) de cette barre (7) sont approximativement perpendiculaire à la direction longitudinale du véhicule automobile (1).

## Patentansprüche

1. Lastträger für ein ein Dach (3) aufweisendes Kraftfahrzeug (1), mit mindestens einer Stange (7) und Befestigungsmitteln (11) zur lösbaren Befestigung der Stange (7) auf dem Dach (3), wobei die Befestigungsmittel (11) Halteelemente (13) und für jedes Halteelement (13) mindestens einen Haken (25) und Verriegelungsmittel (30) aufweisen, wobei jedes Halteelement (13) ausgebildet ist, um auf dem Dach (3) gehalten zu werden, wobei der bzw. jeder Haken (25) bezüglich der Stange (7) bewegbar oder mindestens zum Teil deformierbar und elastisch ist, wobei die Verriegelungsmittel (30) von einer Verriegelungsstellung in eine Entriegelungsstellung verstellbar sind, die Haken (25) in der Verriegelungsstellung verriegeln und die Haken (25) in der Entriegelungsstellung entriegeln, so dass die Haken (25) in der Verriegelungsstellung in Eingriff mit den Halteelementen (13) stehen und die Stange (7) an den Halteelementen (13) festklemmen und dass die Haken (25) in der Entriegelungsstellung von den Halteelementen (13) trennbar sind, und wobei die Verriegelungsmittel (30) für jedes Halteelement (13) mindestens eine Sperre (31), die von der Entriegelungsstellung in die Verriegelungsstellung und umgekehrt verstellbar und ausgebildet ist, um in der Verriegelungsstellung eine Kraft auf den dem genannten Halteelement (13) zugeordneten Haken (25) oder auf einen der Haken (25) oder auf die Haken (25), welche dem genannten Halteelement (13) zugeordnet sind, auszuüben, sowie einen von der Stange (7) gehaltenen Handgriff (35) aufweisen, um die oder jede dem genannten Halteelement (13) zugeordnete Sperre (31) von der Verriegelungsstellung in die Entriegelungsstellung und/oder umgekehrt zu verstellen, **dadurch gekennzeichnet, dass** jedes Halteelement (13) mindestens zum Teil durch einen Bolzen mit mindestens einer Nut (13c) und/oder mindestens einem Vorsprung (13d) und/oder mindestens einer Ausnehmung gebildet ist, die und/oder der mindestens einen Abschnitt eines Eingriffteils (13b) des Halteelements (13) bildet, dass die Verriegelungsmittel (30) für jede Sperre (31) mindestens eine eine Kraft auf diese ausübende Feder (32) aufweisen, dass diese Kraft bestrebt ist, die Sperre (31) von der Verriegelungsstellung gegen die Verriegelungsstellung oder umgekehrt zu verstellen und dass jeder Handgriff (35) bezüglich der Stange (7) schwenkbar und ausgebildet ist, um die oder jede demselben Halteelement (13) zugeordnete Sperre (31) entgegen der von der Feder (32) auf die Sperre (31) ausgeübten Kraft zu verstellen.

2. Lastträger nach Anspruch 1, **dadurch gekennzeichnet, dass** jeder Haken (25) von der Stange (7) um eine Schwenkachse (27) schwenkbar gehalten ist, dass jede Sperre (31) von der Stange (7) in einer zur Schwenkachse (27) des zugeordneten Hakens (25) senkrechten Verschieberichtung geführt ist und dass die Schwenkachse (27) des Hakens (25) derart angeordnet ist, dass diese Schwenkachse (27) ungefähr senkrecht zur Längsrichtung des Kraftfahrzeugs (1) ist, wenn die Stange (7) auf dem Dach (3) des Kraftfahrzeugs (1) befestigt ist.

3. Lastträger nach Anspruch 1 oder 2, **dadurch gekennzeichnet, dass** jede Feder (32) angeordnet ist, um die Sperre (31) gegen die Verriegelungsstellung zu drücken.

4. Lastträger nach Anspruch 3, **dadurch gekennzeichnet, dass** jede Sperre (31) eine Druck- und/oder Auflagefläche (31a) sowie eine Mitnehmernase (31b) besitzt und in der Verriegelungsstellung den bzw. jeden der genannten Sperre (31) zugeordneten Haken (25) mit der Druck- und/oder Auflagefläche (31a) berührt und den betreffenden Haken (25) gegen das zugeordnete Halteelement (13) drückt und dass jeder Handgriff (35) einen Arm (35b) hat, der in der Verriegelungsstellung von der Mitnehmernase (31b) der oder jeder zugeordneten Sperre (31) getrennt ist und der angeordnet ist, um bei einer Entriegelung mit der Mitnehmernase (31b) der oder jeder zugeordneten Sperre (31) in Berührung zu gelangen und die oder jeder zugeordnete Sperre (31) zu verstellen.

5. Lastträger nach einem der Ansprüche 1 bis 4, **dadurch gekennzeichnet, dass** jedes Halteelement (13) ausgebildet ist, um derart am Dach (3) gehalten zu werden, dass sein Eingriffteil (13b) oder jeder seiner Eingriffteile von einem sich oberhalb des Dachs (3) befindenden Raum her zugänglich ist und/oder zugänglich gemacht werden kann, dass die Stange (7) zwei Endabschnitte (9) hat, dass die Befestigungsmittel (11) an jedem Endabschnitt (9) zwei Haken (25) aufweisen, dass jeder Haken (25) einen Eingriffteil (25a) hat, der in einen Eingriffteil (13b) des zugeordneten Haltelements (13) eingreift, wenn die Haken (25) verriegelt sind, wobei die Verriegelungsmittel (30) zum Beispiel für jeden Haken (25) eine separate Sperre (31) oder für die am selben Endabschnitt (9) angeordneten Haken (25) eine gemeinsame Sperre (31) aufweisen.

6. Lastträger nach Anspruch 5, **dadurch gekennzeichnet, dass** die zwei am selben Endabschnitt (9) angeordneten Haken (25) Eingriffabschnitte (25a) haben, die ausgebildet sind, um auf Seiten der zwei Haken (25) in ein zugeordnetes Halteelement (13) einzugreifen, die einander zugewandt sind.

7. Lastträger nach einem der Ansprüche 1 bis 6, **dadurch gekennzeichnet, dass** der Eingriffteil (13b) jedes Halteelement (13) mindestens eine Anschlagfläche zum Zurückhalten eines Eingriffteils (25a) mindestens eines dem betreffenden Halteelement (13) zugeordneten Hakens (25) aufweist, wobei die bzw. jede Anschlagfläche zum Beispiel einen Winkel mit einer vertikalen Richtung bildet.

8. Lastträger nach einem der Ansprüche 1 bis 7, **dadurch gekennzeichnet, dass** die mindestens einen Abschnitt des Eingriffteils (13b) des Halteelements (13) bildende Nut (13c) ringförmig ist.

9. Lastträger nach Anspruch 8, **dadurch gekennzeichnet, dass** jedes Halteelement (13) einen Befestigungsabschnitt (13a) mit einem Gewinde zum Befestigen des Halteelements (13) am Dach (3) aufweist und mit Mitnehmerflächen versehen ist, die ausgebildet sind, damit ein Werkzeug in Eingriff mit dem Halteelement (16) gebracht werden kann, um dieses zu drehen.

10. Kraftfahrzeug mit einem Dach (3) und einem Lastträger (6) nach einem der Ansprüche 1 bis 9, **dadurch gekennzeichnet, dass** jedes Halteelement (13) starr am Dach (3) befestigt ist oder einen Schlitten hat, der entlang einer auf dem Dach (3) befestigten Gleitführung verschiebbar ist.

11. Kraftfahrzeug nach Anspruch 10, **dadurch gekennzeichnet, dass** die Halteelemente (13) starr am Dach (3) befestigt und derart angeordnet sind, dass die bzw. jede Stange 7, wenn sie befestigt ist, im Wesentlichen quer zum Kraftfahrzeug (1) ist und dass die Schwenkachsen (27) der Haken (25) dieser Stange (7) ungefähr senkrecht zur Längsrichtung des Kraftfahrzeugs (1) sind.

## Claims

1. Load carrier for a motor vehicle (1) with a roof (3), comprising at least one bar (7) and fixing means (11) for fixing the bar (7) detachably on the roof (3), the fixing means (11) comprising retention elements (13) and, for each retention element (13), at least one hook (25) and locking means (30), each retention element (13) being configured to be held on the roof (3), the or each hook (25) being mobile relative to the bar (7) or being at least in part deformable and elastic, the locking means (30) being adjustable from a locking position to an unlocking position, locking the hooks (25) in the locking position and unlocking the hooks (25) in the unlocking position in such a way that the hooks (25) are in engagement with the retention elements (13) and clamp the bar (7) to the retention elements (13) in the locking position and that the hooks (25) can be separated from the retention elements (13) in the unlocking position, and the locking means (30) comprising, for each retention element (13), at least one locking device (31), which can be displaced from the unlocking position into the locking position and/or vice versa and is configured to apply a force to the hook (25) associated with said retention element (13) or to one of the hooks (25) or to the hooks (25) associated with said retention element (13) in the locking position, and an operating lever (35) supported by the bar (7) for the purpose of displacing the or each locking device (31) associated with said retention element (13) from the locking position to the unlocking position and/or vice versa, **characterized in that** each retention element (13) is formed at least in part by a pin having at least one groove (13c) and/or at least one projection (13d) and/or at least one recess forming at least one section of an engagement part (13b) of the retention element (13), **in that** the locking means (30) comprise at least one spring (32) for each locking device (31), which applies a force to the locking device (31), **in that** this force tends to displace the locking device (31) from the unlocking position towards the locking position or vice versa and **in that** each operating lever (35) is pivotable relative to the bar (7) and configured to displace the or each locking device (31) associated with the same retention element (13) against the force applied to the locking device (31) by the spring (32).

2. Load carrier according to Claim 1,
**characterized in that** each hook (25) is supported by the bar (7) in such a way that it can pivot about a pivoting axis (27), **in that** each locking device (31) is guided by the bar (7) in a direction of displacement which is perpendicular to the pivoting axis (27) of the associated hook (25) and **in that** the pivoting axis (27) of the hook (25) is arranged in such a way that this pivoting axis (27) is approximately perpendicular to the longitudinal direction of the motor vehicle (1) if the bar (7) is fixed on the roof (3) of the motor vehicle (1).

3. Load carrier according to Claim 1 or 2,
**characterized in that** each spring (32) is arranged in such a way that it presses the locking device (31) towards the locking position.

4. Load carrier according to Claim 3,
**characterized in that** each locking device (31) has a pressure and/or bearing surface (31a) and a driving dog (31b) and contacts the or each hook (25) associated with said locking device (31) with the pressure and/or bearing surface (31a) and presses the respective hook (25) against the associated retention element (13) in the locking position and **in that** each operating lever (35) has an arm (35b) which is separated from the driving dog (31b) of the or each associated locking device (31) in the locking position and which is arranged to come into contact with the driving dog (31b) of the or each associated locking device (31) and to displace the or each associated locking device during unlocking.

5. Load carrier according to any one of Claims 1 to 4, **characterized in that** each of the retention elements (13) is configured to be held on the roof (3) in such a way that its engagement part (13b) or each of its engagement parts is accessible and/or can be rendered accessible from a space above the roof (3), **in that** the bar (7) has two end sections (9), **in that** the fixing means (11) include two hooks (25) on each end section (9), **in that** each hook (25) has an engagement part (25a), which engages an engagement part (13b) of the associated retention element (13) if the hooks (25) are locked, the locking means (30) having, for example, a separate locking device (31) for each hook (25) or a locking device (31) common to the hooks (25) arranged on the same end section (9).

6. Load carrier according to Claim 5,
**characterized in that** the two hooks (25) arranged on the same end section (9) have engagement parts (25a) configured to engage an associated retention element (13) on sides of the two hooks (25) which face one another.

7. Load carrier according to any one of Claims 1 to 6, **characterized in that** the engagement part (13b) of each retention element (13) has at least one stop surface to retain an engagement part (25a) of at least one hook (25) associated with the respective retention element (13), the or each stop surface forming, for example, an angle with a vertical direction.

8. Load carrier according to any one of Claims 1 to 7, **characterized in that** the groove (13c) forming at least one section of the engagement part (13b) of the retention element (13) is annular.

9. Load carrier according to Claim 8,
**characterized in that** each retention element (13) has a fixing section (13a) with a thread for fixing the retention element (13) to the roof (3) and is provided with driving surfaces configured so that a tool can be engaged with the retention element (13) to turn the latter.

10. Motor vehicle with a roof (3) and with a load carrier (6) according to any one of Claims 1 to 9, **characterized in that** each retention element (13) is fixed rigidly to the roof (3) or to a slide that can be displaced along a guideway fixed on the roof (3).

11. Motor vehicle according to Claim 10, **characterized in that** the retention elements (13) are fixed rigidly to the roof (3) and arranged in such a way that the or each bar (7) is, if fixed, substantially transverse relative to the motor vehicle (1) and that the pivoting axes (27) of the hooks (25) and each bar (7) are approximately perpendicular to the longitudinal direction of the motor vehicle (1).
